# EUROPEAN PATENT APPLICATION

(11) **EP 1 659 530 A1**
(43) Date of publication of application: **24.05.2006**
(21) Application number: 05110697.9
(22) Date of filing: 14.11.2005
(51) Int. Cl.: G06Q 30/00

(54) **Method for pay-as-you-go computer and dynamic differential pricing**

(30) Priority: 15.11.2004 US 989122; 08.12.2004 US 6837
(71) Applicant: MICROSOFT CORPORATION, Redmond, Washington 98052-6399 (US)
(72) Inventor: Frank, Alexander, 98052, Redmond (US); Steeb, Curt Andrew, 98052, Redmond (US); Edelstein, David B., 98052, Redmond (US); Duffus, James, 98052, Redmond (US); Light, Mark C., 98052, Redmond (US); Sutton, Paul Christopher, 98052, Redmond (US); Phillips, Thomas G., 98052, Redmond (US); Xu, Zeyong, 98052, Redmond (US); Xu, Zhangwei, 98052, Redmond (US)
(74) Representative: Grünecker, Kinkeldey, Stockmair & Schwanhäusser Anwaltssozietät

(57) **Abstract**

A system for supplying computers with little or no upfrant payment has a service provider, a computer, and an optional funding account. The computer is adapted to render itself substantially useless unless provisioned by the service provider. The service provider has a capability to collect funds from the user and to provide the data necessary for continued operation of the computer. Cryptographic means may be employed to generate and receive the data necessary for continued operation of the computer. The computer's self-imposed sanctions may include slowed operation, reduced graphics capability, limited communication, and limited access to peripherals.

## Description

This application is a continuation-in-part of U.S. Patent Application, "Method and Apparatus for Provisioning Software," filed November 15, 2004 under attorney docket number 30835/40399.

### BACKGROUND

Personal computers, peripherals, and personal computing systems, are usually sold or leased on a perpetual use basis. Specifically, when in the user's possession, he or she has full access to and use of the entire product, both hardware and software. Computers can be a great benefit to people, providing access to information, educational opportunities, connection to others, comparison shopping, etc. However, the traditional high cost of computer hardware and perpetually licensed software can limit ownership of a personal computer to only the most affluent segments of the world's population.

It is desirable to offer the benefits of computer ownership to a less affluent segment of the world's population, or even to those who simply do not wish to pay a high upfront cost for a computer.

### SUMMARY

A service provider may supply a computer to a user where the computer is logically linked to the service provider. As part of a service agreement, the service provider may make the computer available with little or no upfront payment. The computer, however, only may operate when provisioning packets representing value are received from the service provider. When the value stored on the computer is depleted, the computer may invoke sanctions that render itself substantially useless until additional provisioning packets are received. In exchange for the provisioning packets, the service provider may collect funds from the user. By linking the computer to the service provider and invoking difficult-to-defeat sanctions, the computer's value street value may be substantially reduced, thus protecting the service provider's business model.

### BRIEF DESCRIPTION OF THE DRAWINGS

Fig. 1 is a block diagram of a network interconnecting a plurality of computing resources;

Fig. 2 is a block diagram of a system in accordance with an embodiment of the current disclosure;

Fig. 3 is a block diagram of a portion of the service provider of Fig. 2;

Fig. 4 is a block diagram of a computer that may be connected to the network of Fig. 1;

Fig. 5 is a block diagram of the local provisioning module of the computer of Fig. 4; and

Fig. 6 is a flow chart depicting a method of operating the system of Fig. 2.

### DETAILED DESCRIPTION

Although the following text sets forth a detailed description of numerous different embodiments, it should be understood that the legal scope of the description is defined by the words of the claims set forth at the end of this disclosure. The detailed description is to be construed as exemplary only and does not describe every possible embodiment since describing every possible embodiment would be impractical, if not impossible. Numerous alternative embodiments could be implemented, using either current technology or technology developed after the filing date of this patent, which would still fall within the scope of the claims.

It should also be understood that, unless a term is expressly defined in this patent using the sentence "As used herein, the term '_' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term by limited, by implication or otherwise, to that single meaning. Finally, unless a claim element is defined by reciting the word "means" and a function without the recital of any structure, it is not intended that the scope of any claim element be interpreted based on the application of 35 U.S.C. § 112, sixth paragraph.

Much of the inventive functionality and many of the inventive principles are best implemented with or in software programs or instructions and integrated circuits (ICs) such as application specific ICs. It is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation. Therefore, in the interest of brevity and minimization of any risk of obscuring the principles and concepts in accordance to the present invention, further discussion of such software and ICs, if any, will be limited to the essentials with respect to the principles and concepts of the preferred embodiments.

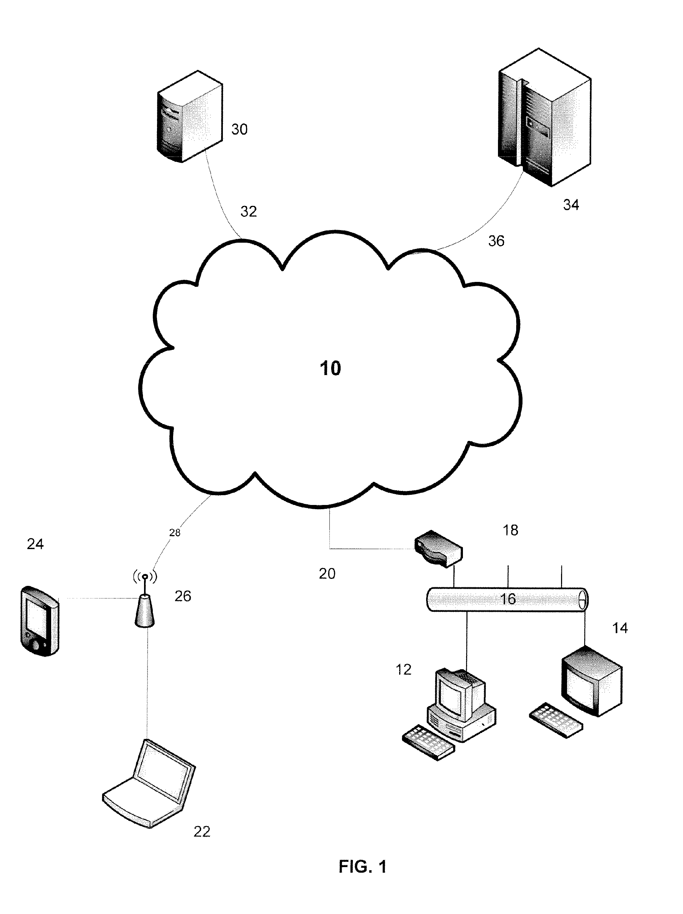

Fig. 1 illustrates a network 10 that may be used to implement a dynamic software provisioning system. The network 10 may be the Internet, a virtual private network (VPN), or any other network that allows one or more computers, communication devices, databases, etc., to be communicatively connected to each other. The network 10 may be connected to a personal computer 12 and a computer terminal 14 via an Ethernet network 16 and a router 18, and a landline 20. On the other hand, the network 10 may be wirelessly connected to a laptop computer 22 and a personal data assistant 24 via a wireless communication station 26 and a wireless link 28. Similarly, a server 30 may be connected to the network 10 using a communication link 32 and a mainframe 34 may be connected to the network 10 using another communication link 36.

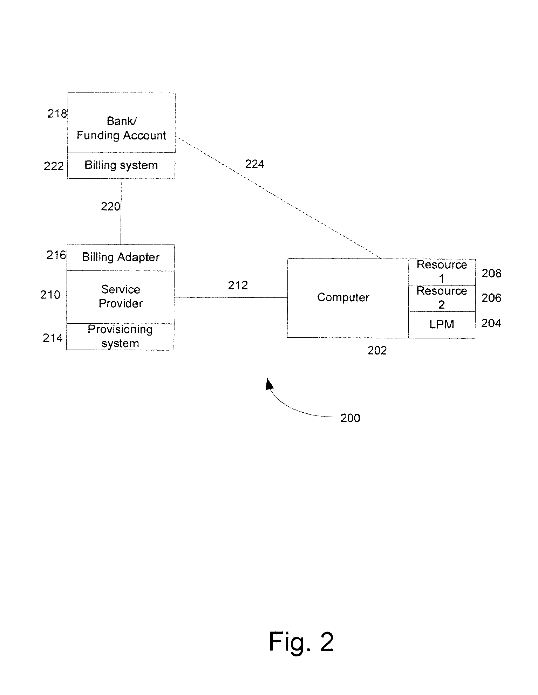

Referring to Fig. 2, a system 200 suitable for implementing an exemplary embodiment of a pay-as-you go computing environment is discussed and described. An exemplary computer 202 may have resources 206 and 208 and a local provisioning module (LPM) 204. The LPM 204 may manage and securely store value that can be applied toward the use of one or more computer resources 206, 208. The resources 206, 208 may be provisioned in the computer 202 at any point prior to their use, for example, during manufacturing, set-up, or previous operation. The resources 206, 208 are provisioned in a manner that allows metering or gating of their operation. Metering their operation may include monitoring an aspect of their operation, such as number of launches, the time (duration) of use, use over a period of time, such as a calendar month, or use of a particular aspect, such as saving data generated by an application program, or output, such as printing. Installation may be performed by any number of parties with physical or logical access to the computer 202 including the service provider 210 or several others not depicted, such as a resource provider, a user, a manufacturer, or a dealer.

The service provider 210 may be coupled to the computer 202 via a link 212, preferably in real time, but off-line mechanisms work equally well. Examples of real-time connections may include dial-up access or the Internet. Off-line mechanisms for the link 212 may include known methods, for example, smart cards, other removable media, or even hardcopy information suitably coded to ensure accuracy and authenticity. The service provider 210 uses the link 212 to send provisioning packets to add value to the computer 202, as discussed in more detail below. An additional participant may optionally be a bank or other funding source 218. In some cases, the funding source 218 may be incorporated by the service provider 210. The funding source 218 may be coupled to the service provider 210 by the link 220. The billing system 222 may be operable to process authorizations from a user of the computer 202 and to process funding requests from the service provider 210. The actual funding process may take advantage of any of numerous known account types, for example, a standard bank savings or checking account, a prepaid account, a stored value account, a credit card account, a telephone postpaid account, etc.

### Service Provider Provisioning System

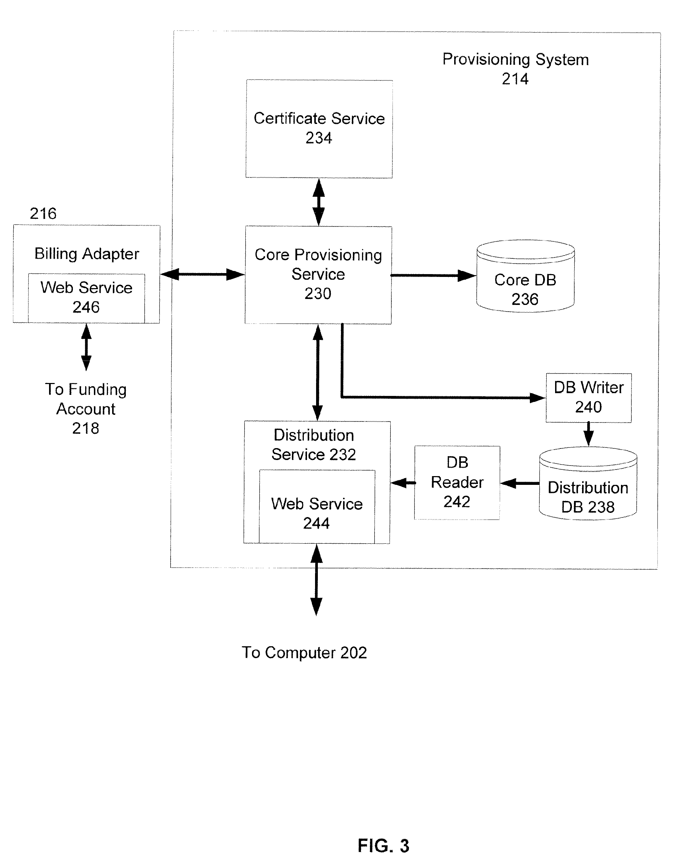

Fig. 3 illustrates a provisioning system 200 to provide provisioning packets for a computing device 202, wherein the computing device 202 may be any of the commonly known computing devices, such as the desktop computer 12, the laptop computer 22, the PDA, 24, a cell phone, or any similar devices. The provisioning system 214 may be implemented to provide provisioning packets targeted at the use of an operating system, or, in an alternate implementation, the provisioning system 214 may be used to provision use of other resources, such as software, a firmware, a feature of a computing device, etc. Similarly, while the provisioning system 214 is shown to provision use of a resource on the computing device 202 communicatively connected to the network 10, it may be used to implement such use on a computing device that may not be connected to the network 10, or it may be only intermittently connected to the network 10.

The provisioning system 214 may include a core provisioning service module 230, a distribution service module 232, a certificate service module 234, a core database 236, and a distribution database 238. The provisioning system 214 may communicate with the billing system 218 via the billing adapter 216, whereas the core provisioning service module 230 may communicate with the distribution database 238 via a database writer 240 and the distribution database 238 communicates with the distribution service 232 via a database reader 242. The computing device 202 may include a local provisioning module (LPM) 204 that communicates with the distribution service module 232 via a distribution web service module 244. The core provisioning service 230 communicates with the billing adapter 216, which itself uses a web service 246 to communicate with the funding account 218. The provisioning system 214 may be located on a server system such as the server 30, or other system communicatively connected to the network 10. Similarly, the billing system 222 may also be located on server system such as the server 30, or other system communicatively connected to the network 10. Moreover, one or more of the various components of the provisioning system 214 may be located on a same server or on a number of different servers located in different locations. For example, the core database 236 may be located on a number of different database servers located at different locations and each communicatively connected to the network 10. The functioning of the provisioning system 214 and its various component modules is explained in further detail below.

While the links 212, 220 and 224 in Fig. 2 may be implemented by web service interfaces, for example, web service interfaces 244, 246, in an alternate embodiment, a user of the computing device 202 may communicate with the distribution service module 232 and the funding account 218 via alternate modes of communication, such as telephone, etc. For example, in a situation, where it is not possible for the computing device 202 to connect to the network 10, a user of the computing device 202 may communicate via a telephone and a voice-recognition enabled user interface attached to the distribution service module 232, via a customer service representative able to communicate with the distribution service module 232, or manually via a smart card or other token, etc.

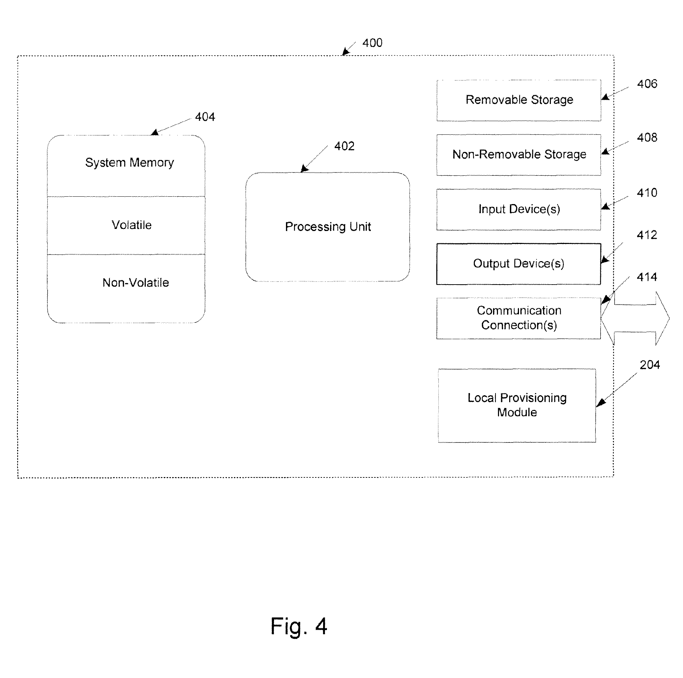

With reference to Figure 4, the exemplary system 200 may include a computing device, such as computing device 400, the same or similar to computing device 202. In its most basic configuration, the computing device 400 typically may include at least one processing unit 402 and memory 404. Depending on the exact configuration and type of computing device, memory 404 may be volatile (such as RAM), non-volatile (such as ROM, flash memory, etc.) or some combination of the two. Additionally, the computing device 400 may also have additional features/functionality. For example, the computing device 400 may also include additional storage (removable and/or non-removable) including, but not limited to, magnetic or optical disks or tape. Some examples of such additional storage is illustrated by removable storage 406 and non-removable storage 408. Computer storage media may include volatile and nonvolatile, removable and non-removable media implemented in any method or technology for storage of information such as computer readable instructions, data structures, program modules or other data. Memory 404, removable storage 406 and non-removable storage 408 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by the computing device 400. Any such computer storage media may be part of the computing device 400.

The computing device 400 may also have input device(s) 410 such as keyboard, mouse, pen, voice input device, touch input device, etc. Output device(s) 412 such as a display, speakers, a printer, etc. may also be included.

The computing device 400 may also contain communications connection(s) 414 that allow the device to communicate with other devices. The communications connection(s) 414 is an example of communication media. The communication media typically embodies computer readable instructions, data structures, program modules or other data in a modulated data signal such as a carrier wave or other transport mechanism and includes any information delivery media. A "modulated data signal" may be a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Computer readable media may include both storage media and communication media.

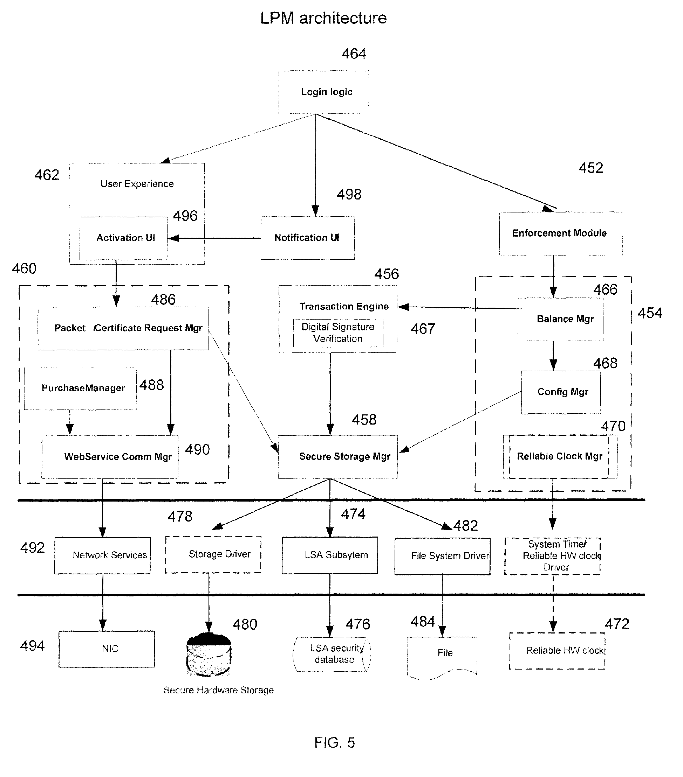

A local provisioning module (LPM) 204 may provide part of the security basis surrounding the computing device 400. The local provisioning module 204 is discussed in more detail in the following description of Fig. 5. Components of the LPM 204 may be located on non-removable non-volatile memory, as part of the system memory 404, as part of various hardware components of the computer 400, including the processing unit 402, interface circuitry (not depicted) or as any combination of these. The functioning of the LPM 204 is explained in further detail below.

Fig. 5 illustrates a further detailed block diagram of the LPM 204. The LPM may be part of a trusted computing base, as know in the art, or may be an extension of a trusted computing base. The LPM 204 is communicatively coupled to the service provider 210. The LPM 204 resides computing system such as the computing device 400. The LPM 204 may perform various functions including interacting with users of the computing devices for interacting with the service provider 210 via the network 10, etc.

The LPM 204 may perform the function of enforcing a particular state on the computing device 400 by interacting with the particular login program used by the client computing device 400. In a particular implementation where the client device is using the Windows® product activation (WPA) system as the login logic 464, the LPM 204 may interact with the WPA to enforce the particular state on the client computing device 400. However, in an alternate implementation, the LPM 204 may interact with any other appropriate operating system login program. The implementation of the LPM 204 may be a grouping of various logical components implemented in software and composed as a library linked into a login program used by the WPA. However, in an alternate implementation of the LPM 204, one or more of the various logical components of the LPM 204 may be implemented in hardware. Specifically, the LPM 204 may include an enforcement add-on module 452 to enforce the computing device 400 to operate in a particular state, a metering module 454 to meter use of a resource provisioned on the computing device 400, a transaction engine 456 to process provisioning packets provided by the service provider 210, a secure storage manager 458 to provide secure storage for the provisioning packets, a communication module 460 to communicate with the service provider 210, and a user experience module 462 to interact with a user.

The enforcement module 452 may be inserted into the login logic 464 of the computing device 400. When a user logs onto the computing device 400 using the login logic 464, or requests use of a chargeable provisioned resource 206 208, the enforcement module 452 may query the metering module 454 for balance information. If the enforcement module 452 determines that the computing device 400 has enough value for the requested activity, it may allow the computing device 400 to operate in its normal manner and allow the user to log onto the computing device 400, or use the requested resource 206 208. However, if the enforcement module 452 determines that the computing device 400 does not have enough value available, it denies the login or access to the requested resource and may invoke a user interface to prompt the user to add value to the available balance.

To carry out the enforcement task, the enforcement module 452 may be able to disable or otherwise sanction resources under the direct influence or control of the computing device 400.

The metering module 454 may include a balance manager 466 for reading and verifying a current balance available for login or usage of provisioned resource and for updating the current balance. The metering module 454 may also include a configuration manager 468 for determining valid system configuration information, such as authorized, i.e. chargeable, peripherals and a reliable clock manager 470 for maintaining a monotonic timer, for example, a clock or timer that always counts in one direction and is not resettable. The metering module 454 may provide the mechanism for monitoring how often, how much, or over what period the computing device 400, or components thereof, are used. The metering module 454 may utilize hooks in the operating system to count application starts, for example, when metering usage by application. Alternately, the metering circuit 454 may monitor the processing unit 402 cycles/usage to determine how much the computing device 400 or an individual application has actually been in operation. In another alternate embodiment, the reliable clock manager 470 may be monitored to determine when a given period for authorized use has expired, for example, a calendar month or 30 days.

The reliable clock manager 470 may use a reliable hardware clock 472 to accomplish the task of maintaining the always changing timer. In one embodiment, the time is increasing, but the timer may also be designed to decrease. In either case, monotonic operation, that is, always counting in one direction is desired. The reliable clock manager 470 may be used to provide system time, or may be used to provide time service only for usage metering. Both have advantages and may be used, but in either case, metering based on Greenwich Mean Time (GMT) may reduce nuisance problems with local time zones and the Date Line. The balance manager 466 and the reliable clock manager 470 are very sensitive and important to the secure operation of the LPM 204, and therefore they are likely to be under various security attacks during the operation of the LPM 204.

The enforcement add-on module 452 may function as an event dispatcher that invokes the balance manager 466 based upon certain events, while the balance manager 466 may determine what action to take when it is invoked in response to an event. Examples of various events that may cause the enforcement add-on module 452 to invoke the balance manager 466 are those system events that are covered by the usage plan currently in effect. Such events may include (1) a logon event, (2) a system unlock event, (3) a restore from hibernation event, (4) a wake up from standby event, (5) a user triggered event, such as a request to use a peripheral (6) a logoff event, (7) a packet download, (8) a timer tick, etc. The balance manager 466 may accept the event as an input and return a result action to the enforcement add-on module 452. For example, the result action may be either an approval or a denial. When the action is denied, sanctions may be invoked and, in some embodiments, an opportunity to add provisioning packets and update a balance in the balance manager 466 may be offered to the user.

The transaction engine 456 may process a provisioning packet in order to update the balance in the balance manager 466. The transaction engine 456 may ensure that any provisioning packet is consumed only once to update the balance. The transaction engine 456 may be designed so that it performs atomic update transactions, so the balance update and the consumption of the provisioning packet are always performed together.

To process provisioning packets, the transaction engine 456 may include a digital signature verification circuit 467. The digital signature verification circuit 467 may have circuitry and/or software for decrypting the provisioning packet, whether the provisioning packet is received electronically over the Internet, locally from a local area network, from removable media 406, entered manually, or another method of transport. When using traditional public key infrastructure ("PKI") the message may be decrypted, if encrypted, and the hash may be generated and checked against the digital signature to validate the integrity and authenticity of the provisioning packet. The particular encryption algorithm employed, for example, RSA™ or elliptic curve, is not significant. Digital signature technology including sender verification and content verification is well known and not covered in detail here.

The secured storage manager 458 may allow the LPM 204 to store balance data in a secured manner so that it cannot be tampered with by a user and so that it is accessible only by the LPM 204. After a provisioning packet is downloaded by the LPM 204, it may be stored in the secured storage manager 458. Similarly, the balance counter and the packet consumption counter may also be stored in the secured storage manager 458. The secured storage manager 458 may also store data that is used in the set-up and operation of the local provisioning module 416. In general, this is data that, ifcompromised, may be used to circumvent the controls for pay-per-use or pre-pay operation. Among such data may be a unique identifier. The unique identifier may be a number or code that can be used to identify one computing device 400 from another. The unique identifier may also be used by the service provider 210 to prepare digitally signed provisioning packets that can only be used by the computer 202 with the matching unique identifier. Provisioning packets may be data received that add value to the balance manager 466.

Some of the data associated with the authentication of provisioning packets may be stored in the secure storage manager 458. For example, a transaction sequence number may be used to discourage or prevent replay attacks. In addition, a "no-earlier-than" date may be extracted from the provisioning packet and stored to discourage or prevent clock tampering attacks. In one embodiment, the no-earlier-than date may be the date/time that the provisioning packet was created. Because the use of the provisioning packet may not take place before the provisioning packet was created, neither may the clock, for example, reliable hardware clock 472, of the computing device 400 be set to a date or time prior to the latest date of the last provisioning packet.

State data, stored by the secure memory manager 458, may be used to indicate whether the computing device 400 is in a fully operational mode or if the computing device 400 or an application is under some restriction or sanction. While most software may be stored or executed from system memory 404 there may some executable code, for example, applications, routines, or drivers that are ideally tamper resistant. For example, a routine that sets the reliable hardware clock 472 may itself need to be protected to prevent tampering and fraud.

Metering or usage data created or used by the metering module 454 may need more protection than that offered by system memory 404 and may therefore be stored in the secure storage manager 458. Metering or usage data may include, for example, the number of usage units remaining, the maximum number allowable usage units, a list of metered applications, or a stop time/date. Closely related to metering or usage data may be the usage plans. To provide flexibility, users may be allowed to select from a number of usage plans, as mentioned above. The usage plan may include both actual use, i.e. time of operation or activations of a resource. These usage plans may include unlimited use for a period of calendar time, use for a number of hours, use by application using either number of activations or usage, use by input/output (network connectivity), as well as others including combinations of the above. Protection of the usage plans may be important because it is not desirable for a user to be able to alter or create new plans that could result in fraudulent use.

A certificate revocation list ("CRL") may be used to determine if the current root certificate is valid. When not retrieved real-time from a host, the CRL may be securely stored locally to prevent tampering that may allow fraudulent use by presenting a provisioning packet signed by a compromised or non-authorized private key. While the public keys of a root certificate are in the public domain and technically do not need protection, in the interest of the integrity of provisioning packet verification, the root certificate may be stored in the secure storage manager 458. In the illustrated implementation, the secured storage manager 458 may be implemented as a dynamic link library (dll) so that the user experience module 462 can access the secured storage manager 458.

To ensure that the data stored in the secured storage manager 458 is secure, a data encryption key may be used to store the data in the secured storage manager 458 and only a module having a data encryption key is able to read the data from the secured storage manager 458. The secured storage manager 458 may communicate with a local security authority (LSA) subsystem 474 to communicate with an LSA database 476, a storage driver 478 to communicate with secure hardware storage 480, and a file system driver 482 to communicate with a file 484 on the computing device 400. For added security, an alternate implementation of the secured storage manager 458 may also use multiple copies of the data stored in the secured storage manager 458 so that each copy can be cross-referenced to ensure that there is no tampering with any single copy of the data. While the implementation of the LPM 204 discussed here has the secured storage manager 458 implemented in software, in an alternate implementation, the secured storage manager 458 may be implemented in hardware.

The communication module 460 may include a packet/certificate request manager 486 to request provisioning packets and/or certificates or to purchase additional provisioning packets from the service provider 210, and a web service communication manager 490 that allows the LPM 204 to communicate with the network 10.

The packet/certificate request manager 486 may receive a request to download a packet or a certificate from the service provider 210. For example, the packet/certificate request manager 486 may communicate with the service provider 210 to receive a certificate from a known source, such as the service provider 210. The packet/certificate request manager 486 may also be responsible to acknowledge to the service provider 210 upon successful download of a certificate or a provisioning packet. The packet/certificate request manager 486 may use a provisioning protocol to communicate with the service provider 210. A packet downloaded by the packet/certificate request manager 486 may be stored in the secured storage manager 458.

The purchase manager 488 may allow a user of the computing device 400 to add value to the local balance by purchasing provisioning packets by receiving payment information from the user and communicating the payment information to the service provider 210 or a funding account 218. For example, the purchase of a scratch card at a local outlet may be used to add value to the funding account 620 that is then used to create a provisioning packet that is downloaded, verified and used to update the balance in the balance manager 466. Both the packet/certificate request manager 486 and the purchase manager 488 may communicate with the network 10 using the web service communication manager 490. The web service communication manager may use a network services manager 492 and a network interface card (NIC) 494 to communicate with the network 10. Note that in the present implementation, the web service communication manager 490 is used to communicate with the network 10, in an alternate implementation, other communication tools, such as file transfer protocol (FTP), etc., may be used to communicate with the network 10.

The user experience module 462 may include an activation user interface (UI) 496 to ask a user to enter an InitKey that allows the packet/certificate request manager 486 to download the certificate from the service provider 210, and a notification UI 498 that allows the LPM 204 to interact with the user. The activation UI 496 may also invoke the purchase manager 488 to allow a user to purchase additional provisioning packets for balance recharging.

The notification UI 498 may include various user interfaces that allow the user to query current balance information, usage history, etc. The notification UI 498 may be invoked by the user or by the login logic 464. In a situation where the balance available for using a provisioned resource is low, the login logic 464 may invoke the notification UI 498 to inform the user that an additional purchase may be necessary. The notification UI may be constantly active and it may provide notification service to the user via a taskbar icon, a control panel applet, a balloon pop-up, or by using any other commonly known UI method.

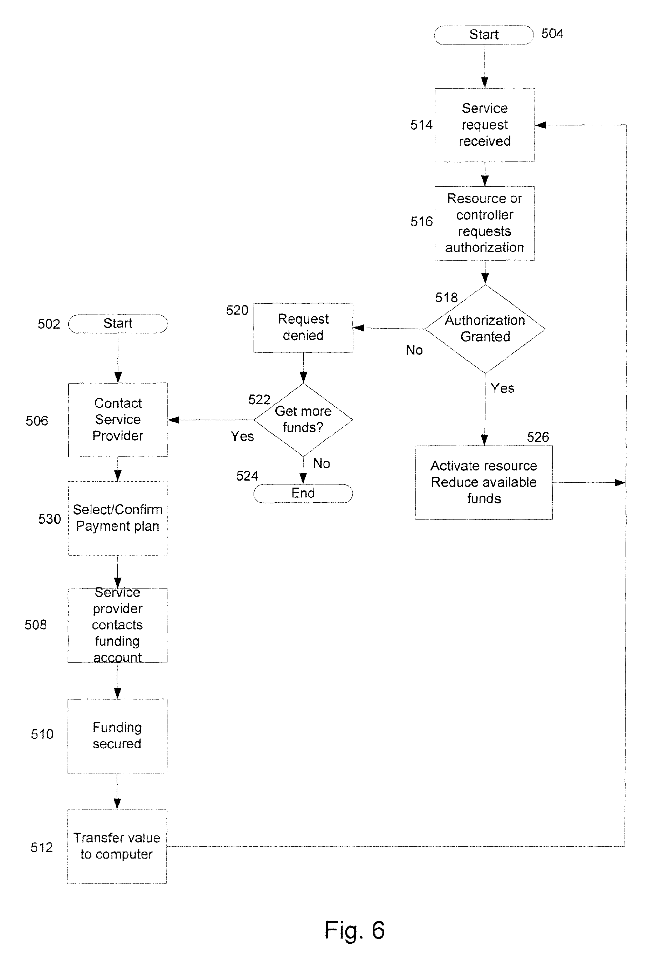

Now referring to Fig. 6, an exemplary method of operating the system 200 may begin at either 502 or 504 depending on the stage of operation. When a user proactively decides to extend the operation of the computer 202, either initially or after a period of operation, the user may instantiate 502 a provisioning user interface (shown in priority application 30835/40399 listed above) and contact 506 a service provider. The service provider 210 may typically be the operator that provided the computer, or may be an entity contractually linked to the service provider 210. The service provider 210 may typically provide the computer and at least one usage plan for determining operation of the computer 210. In one embodiment, the computer 210 may be provided for little or no upfront money. In return, the service provider 210 may sell the user provisioning packets that add to a value balance in the balance manager 466 of the metering circuit 454. It may be a key part of the service provider's business strategy to prevent provisioning packets from being accepted by the computer 202 from a rogue provider (not depicted). Rogue providers may include both hackers and unauthorized service providers acting without the permission of the service provider 210 who supplied, and who may still own title to, the computer 202.

When in contact with the service provider 210, the user may identify, implicitly or explicitly, the computer 202 and their own identity. The computer's identity may be required in order to provide a correctly identified provisioning packet. The user's identity may be needed for separate authentication of a funding request.

When the user's identity is confirmed, the service provider 210 may contact 508 a funding account 218 through the billing adapter 216 and billing interface 222. A confirmation from the funding account 218 may allow the service provider to confirm the funding is secured 510. The types and methods for funding are known. Briefly, funding accounts may include a user's bank account, a credit card company for post-paid operation, or a scratch card issuer, in the case of prepaid operation.

The use of a scratch card may allow a user without a bank account or credit to operate the computer 202 by buying scratch cards from a retailer. The cards may be activated and then registered by the user for later use in buying provisioning packets. Payment is then made by the clearinghouse function of the scratch card issuer.

Another account type may be offered through an existing service provider 210, such as a telephone company, that already has a credit and billing system in place. A telephone company may not only provide the computer 202 but an Internet connection, such as dial-up or digital subscriber line (DSL). In such a case, the service provider 210 and the funding account 218 may be the same entity.

When the funding is secured at 510, the service provider 210 may prepare a provisioning packet for transferring 512 value to the computer 202. The value may be in terms of points or minutes or some other usage metric. The mechanism for provisioning packet creation and authentication may use public key infrastructure involving signed and authenticated messages that may include not only the value transferred but computer 202 identification information, clock information, a sequence number, etc, as discussed above. While the system 200 shows network communication as the transfer mechanism for the provisioning packets, alternate methods such as pre-paid tokens, i.e. smart cards, or even a manually entered character sequence representing the provisioning packet may be acceptable. The details of public key infrastructure and its use for digital signature are known in the industry. When the provisioning packet has been received and processed and the value is stored in the balance manager 466, the computer 202 is ready for operation in accordance with the terms of the current usage plan.

The user may at that point, or when starting a session at 504, initiate an operation that generates a service request 514. As discussed above, the actual event or operation that triggers the service request 514 may be a login. Alternately, the service request 514 may be for the use of a specific device, such as a printer or the service request 514 may be for use of a resource, such as data transfer via the Internet. For the purpose of this discussion, the example of a login will be used. The user may activate a login screen generating the service request 514. The login logic may request 516 authorization from the enforcement module 452. The enforcement module 452 may query the metering module 454 for authorization. The metering module 454 may determine 518 that the balance of funds is sufficient based on the currently active service plan. The yes branch of 518 may be followed and the authorization is granted back through the chain of the enforcement module 452 to the login logic 464. The requested service, in this case login, may be activated 526 and the user may use the computer in the prescribed fashion until the next event that causes a service request 514 to be generated, initiating action as described.

The prescribed operation of the computer may be monitored in different ways depending on the usage plan. When the usage plan involves unlimited use over a period of time, the metering circuit 454 may only monitor passage of time, granting all requests from the enforcement module 452 for service activations as long as the time period has not been exceeded. On the other hand, when the usage plan incorporates specific usage, for example, minutes of connect time, disk space used, or a number of launches of an application, the metering module 454 may monitor in real time the computer 202 usage. When monitoring real time usage, the metering module 454 may send messages to the enforcement module 452 to warn the user when the balance is nearing a state that re-provisioning is needed. The value of the balance is consumed according to the rate set by the usage plan for the activation requested.

When the balance is insufficient, the no branch from 518 may be followed. The request is denied 520 and action taken depending on the business rules associated with the currently active usage plan may be invoked. The action taken may range from an initial warning that funds have been depleted or, in an extreme circumstance, the enforcement module 452 may invoke a sanction such as slowing the computer 202 to a virtual standstill and/or disabling all computer 202 capabilities except those required to contact the service provider 210 for provisioning.

The user may be presented 522 with an option to request more provisioning packets. When accepted, the yes branch is followed to 506 and provisioning occurs as described above. When the user selects not to contact the service provider 210 for additional provisioning the no branch from 522 may be followed to 524, where any sanction activated remains in place until the user chooses to restart at either 502 or 504.

It may be desirable for the user to change either or both the usage plan or the payment method. A change in usage plan may accommodate a different usage pattern or simply to take advantage of better pricing offered by the service provider 210. The payment method may be changed as a user's preferences or financial situation dictate. The user may contact 506 the service provider 210 in conjunction with either entry point 504 or 502. When engaged with the service provider 210, a selection of usage plans and payment options may be presented 530. The user can select the usage plan that best meets his or her anticipated usage.

The service provider 210 may want to provide an incentive to increase use of the computer and also to protect the service provider's investment at the low usage end. The payback period for a computer 202 provided at low cost may be determined almost exclusively by how much the user actually uses the computer 202 or the provisioned resources 206 208. When a user has a very low usage profile, the payback to the service provider 210 may be unacceptably long from a financial standpoint. On the other hand, extremely high use may pay back the computer unexpectedly quickly. While not necessarily bad, high-use users may be attractive targets for competition. Therefore, it may be useful to provide usage plans that consume more value during early use, for example, in a month, and consume value more slowly after certain usage levels are achieved. This may be accomplished in the metering circuit 454 by a simple comparison of use over a period of time. The enforcement module 452 may be programmed to report back to a requesting service, for example, during step 518, that a usage trigger has been reached and subsequent use will require less value to be deducted from the balance.

## Claims

1. A method for supplying a computer comprising:
providing a computer, the computer comprising a resource;
providing at least one usage plan;
providing data for provisioning a value balance in the computer;
providing a usage metric corresponding to use of the resource, allowing the resource to consume the value balance according to the usage plan.

2. The method of claim 1, wherein the usage plan comprises actual use of the resource.

3. The method of claim 1, wherein the usage plan comprises unlimited use of the resource for a period of calendar time.

4. The method of claim 1, wherein the computer further comprises a trusted computing base.

5. The method of claim 1, further comprising receiving a payment for use of the computer, wherein the receiving the payment for use of the computer occurs prior to providing data for provisioning the usage metric.

6. The method of claim 1, further comprising receiving a payment for use of the computer, wherein the receiving the payment for use of the computer occurs after providing data for provisioning the usage metric.

7. The method of claim 1, further comprising validating the data to be authentic.

8. The method of claim 1, wherein providing data for provisioning the usage metric comprises one of providing a digitally signed data packet, providing a pre-paid token, and providing a digitally signed alpha-numeric sequence.

9. The method of claim 1, wherein providing the usage plan further comprises selecting the usage plan from a plurality of usage plans.

10. The method of claim 1, wherein providing the usage plan further comprises downloading the usage plan from a host computer.

11. The method of claim 1, wherein the consuming the usage metric further comprises consuming the usage metric at a variable rate according to a usage pattern specified in the usage plan.

12. The method of claim 1, wherein the resource is one of a storage devices 406 408, input/output devices 410 412, communications 414, application programs or application data stored in memory 404, or media content

13. A method of enabling use of a computer, the computer comprising a resource, a metering module, and a communications capability for receiving a provisioning packet, the method comprising:
receiving a request to provide the provisioning packet;
confirming a payment capability;
preparing the provisioning packet; and
sending the provisioning packet to the computer.

14. The method of claim 13, wherein the confirming a payment capability further comprises confirming the payment capability at a funding account.

15. The method of claim 13, wherein the confirming a payment capability further comprises confirming the payment capability by authenticating a code.

16. The method of claim 13, further comprising:
collecting a payment from one of a funding account and a clearinghouse.

17. A computer configured for pay-per-use operation comprising:
a resource supporting a function of the computer;
a metering module coupled to the resource, the metering module for monitoring the use of the resource; and
a circuit, coupled to the metering module and the resource, wherein the circuit limits an operation of the computer responsive to the metering module.

18. The computer of claim 17, further comprising a provisioning circuit for accepting a provisioning message for resetting the metering module.

19. The computer of claim 18, wherein the provisioning message comprises a digitally signed message.

20. The computer of claim 17, wherein the metering module compares a current value against a limit.

21. The computer of claim 17, further comprising:
a secure memory; and
a usage plan stored in the secure memory wherein the metering module triggers the circuit corresponding to a meter value and the usage plan.

22. The computer of claim 21, wherein the secure memory stores a plurality of usage plans.

23. The computer of claim 21, wherein a rate of change of the meter value varies with a usage level.

24. The computer of claim 23, wherein the usage level corresponds to one of a usage frequency and a usage duration.

25. The computer of claim 17, wherein the resource comprises one of a memory, a communication device, a computational component, and a display component.

26. A computer-readable medium having computer-executable instructions for performing steps comprising:
recording use of a first resource;
comparing the use of the first resource against a first limit; and
limiting a function of a second resource when the use of the first resource reaches the first limit.

27. The computer-readable medium of claim 26, having further computer-executable instructions wherein the first resource is the same as the second resource.

28. The computer-readable medium of claim 26, having further computer-executable instructions for comparing the use of the first resource against a second limit.

29. The computer-readable medium of claim 26, having further computer-executable instructions for sending a message when the use of the first resource reaches the second limit.

30. The computer-readable medium of claim 26, having further computer-executable instructions for receiving a signal, the signal resetting a usage value of the first resource.

31. The computer-readable medium of claim 26, having further computer-executable instructions for recording the use of the first resource at a rate set by a usage plan.
